Europäisches Patentamt

(19) European Patent Office

Office européen des brevets

(11) Publication number: **0 101 766**

**A1**

(12)

# EUROPEAN PATENT APPLICATION

(21) Application number: **82304431.8**

(22) Date of filing: **23.08.82**

(51) Int. Cl.³: **G 02 B 5/16**

(43) Date of publication of application:
07.03.84 Bulletin 84/10

(84) Designated Contracting States:
AT BE CH DE FR GB IT LI NL SE

(71) Applicant: AMP INCORPORATED
Eisenhower Boulevard
Harrisburg Pennsylvania(US)

(72) Inventor: Conrad, Lee Roger
791 Old Quaker Road
Lewisberry Pennsylvania 17339(US)

(72) Inventor: Dowling, Edward Camp
612 Sandra Avenue
Harrisburg Pennsylvania 17109(US)

(74) Representative: Warren, Keith Stanley et al,
BARON & WARREN 18 South End Kensington
London W8 5BU(GB)

(54) Laminated optical fibre ribbon cable.

(57) A laminated fiber optic ribbon cable, and method of manufacturing same, is disclosed. The cable comprises top (16) and bottom (2) sheath layers, at least two elongate strength members (6) each located along respective sides of the bottom sheath layer (2), and a plurality of spaced-apart and parallel waveguides (10) positioned upon the bottom sheath layer (2) between the two strength members (6). Subsequent to the introduction of insulating filler material (12) between the sheath layers (2, 16), longitudinal edge portions of the sheath layers are bonded together at each side of the cable, with longitudinal gaps (20) being thereby defined along each side of the cable between the bonded sheath edge portions and the two cable strength members. Preparation of the cable for termination may thereby be effectuated by cutting into the longitudinal gaps and peeling back the top sheath layer to access the waveguides and strength members therebeneath.

FIG. 7

FIG. 8

EP 0 101 766 A1

## LAMINATED OPTICAL FIBER RIBBON CABLE

The present invention relates to fiber optic cable and more particularly to laminated fiber optic ribbon cable, and a method of manufacturing same, which is of the type incorporating axial strength members therein for improving structural integrity.

Increased utilization of optical systems for data transmission has been hindered by the nonavailability of an economical optical cable configuration which has mechanical integrity, yet which is readily terminated. In particular, the industry had been in need of a flat fiber optic ribbon configuration having multiple coplanar optical waveguides therein. Because of the fragile nature of optical waveguides, such a cable of necessity must have a construction for limiting the bend radius of the cable and effectively insulating the light transmitting mediums from externally originating mechanical stress, such as compressive or tensile forces exerted on the cable. Further, any proposed cable design must be amenable to easy end termination. This requirement necessarily implies that the waveguide be preserved on a relatively fixed, and therefore locateable, orientation. Moreover, the waveguides in any such cable must be readily accessible during the termination operation. Finally, the cable must be economical to produce and easy to manufacture, since the cost effectiveness of an optical system vis-a-vis a hardwire system depends in large measure on the cost of the cable employed.

No flat optical waveguide cable has been heretofore achieved which could satisfy all of the above design constraints. One approach, disclosed in U.S. Patent No. 3,887,265, teaches an optical cable having oversized strength members and optical bundles embedded in an outer sheath and an outer oversheath in a predetermined configuration. While this cable

9371

configuration works well, it is relatively expensive to produce. Further, it is relatively difficult to terminate the cable since removal of multi-layers of sheathing by a stripping operation is cumbersome and uncertain due to variations in the sheathing thickness. Another cable configuration disclosed in U.S. Patent No. 4,089,585 teaches strength members embedded within an extruded sheath having a bore therethrough for loosely receiving optical waveguides. Such an extruded construction, however, is also relatively expensive, and a precise location of the waveguides within the bore cannot be guaranteed with a sufficient degree of certainty.

A laminated flat fiber optic ribbon cable, and method of manufacturing same, is disclosed which contemplates precise location of at least two elongated large strength members and a plurality of smaller optical waveguides upon a bottom one of two sheath layers. A top sheath layer covers the larger dimensioned strength members, and insulating material is provided between the top sheath layer and bottom sheath layer to mechanically cushion the optical waveguides in the cable. Optionally, the present cable may be fabricated having the waveguides freely suspended within the insulating material if desired. The top and bottom sheath layers have longitudinal edge portions bonded together at each side of the cable, with longitudinal gaps being thereby defined along each side of the cable between the bonded sheath edge portions and the two strength members. The cable is prepared for termination upon cutting into the longitudinal gaps and peeling back the top sheath layer to gain access to the waveguides and strength members therebeneath.

FIGURE 1 is a perspective view of the subject cable bottom sheath, having a metallic sheath of material bonded thereto at the beginning of the cable fabrication procedure. Selective longitudinal cuts, as illustrated, have been made into the metallic sheet pursuant to the teachings of the present invention.

FIGURE 2 is a perspective view of the bottom cable sheath and metallic sheet of Figure 1, with alternate longitudinal sections of the cut metallic sheet being peeled away from the bottom sheath layer.

FIGURE 3 is a perspective view of the subject cable bottom sheath and metallic reinforcement or strength members bonded thereto, in sequence with Figures 1 and 2. Additional bonding material has been introduced between the longitudinal reinforcement or strength members pursuant to the teachings of the present invention.

FIGURE 4 is a perspective view taken in sequence with Figures 1, 2, and 3, with elongate optical waveguides positioned between the longitudinal reinforcement or strength members.

FIGURE 5 is a perspective view taken in sequence following Figure 4, with layers of insulating material positioned between the longitudinal strength members and over the elongate optical waveguides.

FIGURE 6 is a perspective view taken in sequence following Figure 5 in the manufacture of the cable, illustrating the introduction of adhesive material along the outer edge surfaces of the bottom sheath layer.

FIGURE 7 is a perspective view of the present invention taken in sequence following Figure 6, and illustrating a top cover sheath positioned over the longitudinal strength members and the bottom cable sheath.

FIGURE 8 is a transverse section view of the subject optical waveguide cable, showing the location where cable stripping cuts are to be made.

FIGURE 9 is a transverse section through an alternative embodiment of the subject invention, illustrating an alternative cable embodiment having longitudinal reinforcement or strength members of a circular transverse section.

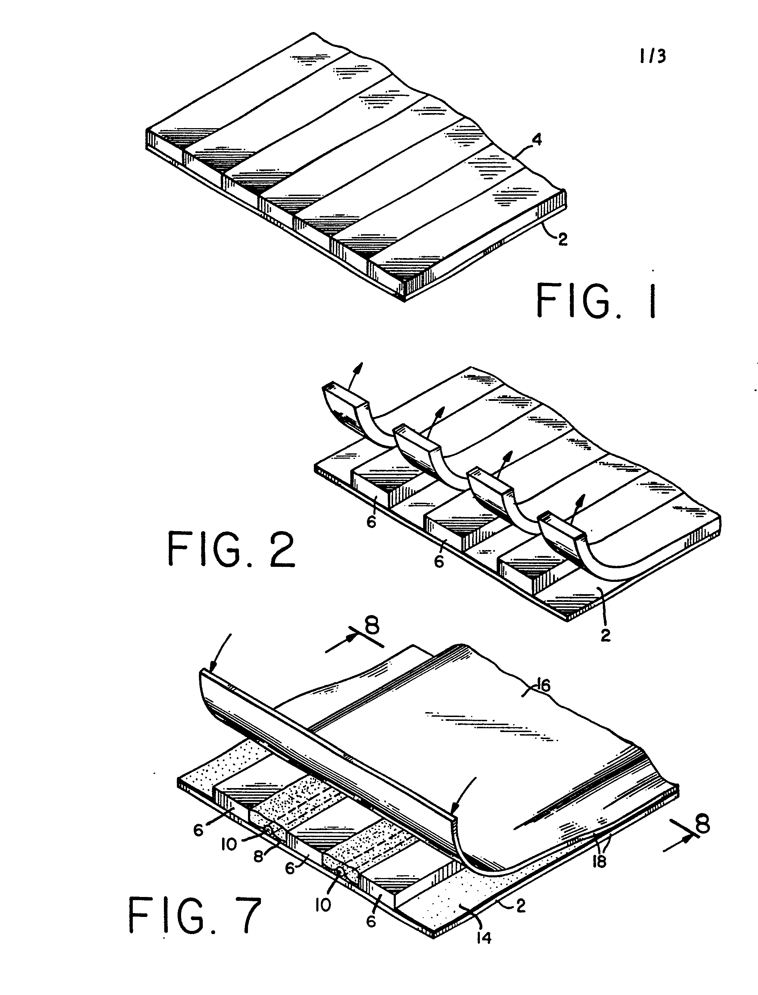

A method of manufacturing the subject optical waveguide cable proceeds as follows with sequential reference to Figures 1 through 7. Referring first to Figure 1, a base sheath layer 2, preferably formed of a polyester material (Mylar), is adapted having a metallic sheet 4 of tin plated copper bonded thereto. While such materials are preferred, other materials which are substitutable and which will be apparent to one skilled in the art are intended to be within the contemplation of the present invention.

Longitudinal cuts are made through the metallic sheet along the axial length of the cable, and thereby define a plurality of elongate reinforcement or strength strips 6 across the base sheath layer 2. Alternate ones of the reinforcement strips 6 (Figure 2) are thereafter peeled back and removed, with a plurality of strips thereby remaining across the base sheath layer 2 in a spaced apart parallel configuration. It

9371

is intended that the outer reinforcement or strength strips upon the bottom sheath layer 2 be removed to thereby expose an outer edge portion of the base sheath layer for the purpose explained in detail below.

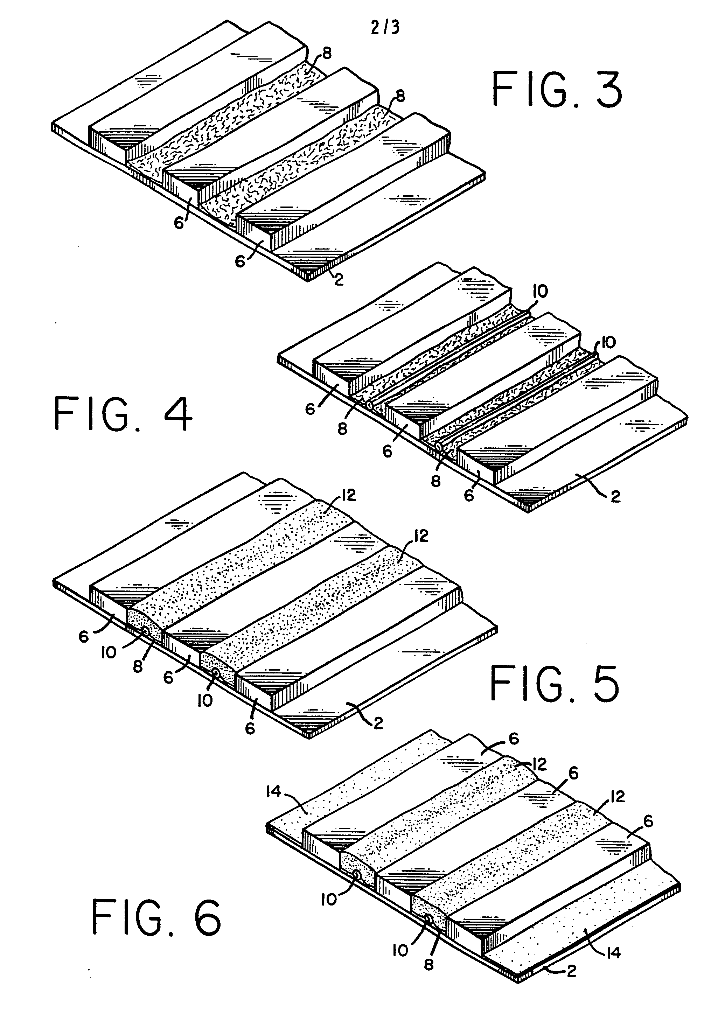

Proceeding with the manufacture of the present invention, and with reference to Figure 3, a layer of adhesive 8 (e.g., epoxy) is introduced between the elongate reinforcement strips 6 and upon the base sheath layer 2. Thereafter (Figure 4), optical waveguides 10, composed of either glass or plastic light-transmitting material, are situated between the longitudinal reinforcement strips 6 and upon the base sheath layer 2. The epoxy adhesive 8 is permitted to cure to thereby fixedly locate the optical waveguides 10 and 8 in permanent location upon the bottom sheath layer 2. Continuing, as shown in Figure 4, an insulating material 12 is then introduced between the longitudinal strips 6 and over the optical waveguides 10. The insulating material 12 can constitute any one of a number of foam materials, e.g., a silicone foam filler or suitable insulating material.

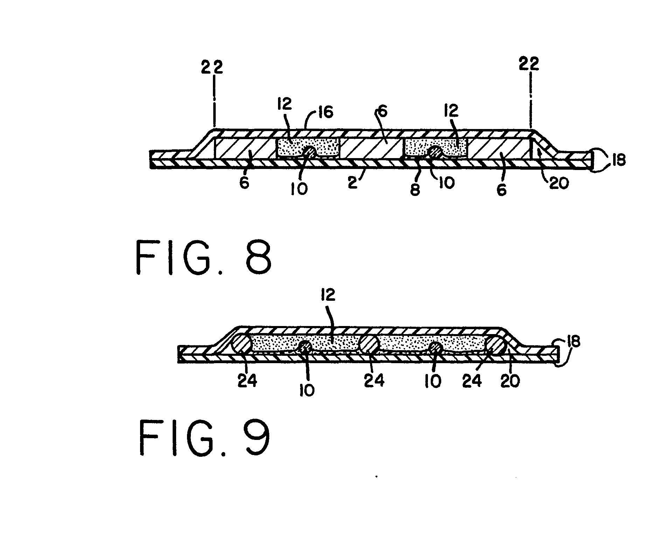

A layer of epoxy adhesive 14 is applied to the exposed longitudinal edge portions of the bottom sheath layer 2 as illustrated in Figure 6. Thereafter (Figure 7), a strippable top cover 16, formed of a polyester material such as Mylar, is applied to the top of the base sheath layer 2 in a progressive fashion. The top cover 16 and the base sheath layer 2 are attached together by clamping pressure upon the epoxied edge portions 18. As best shown by the transverse sectional view through the cable illustrated by Figure 8, between the longitudinal reinforcement strips 6 and the edge portions 18 of the base sheath layer 2 and the top cover 16 are longitudinal edge gaps 20 which extend along the edge of the cable the length thereof. The longitudinal edge gaps 20 facilitate convenient preparation of the cable for end termination according to the following procedure. Since the top sheath cover 16 and the base sheath layer 2 are attached only at the edge portion 18, by making longitudinal cuts 22 through the top sheath layer and into the longitudinal edge gaps 20, the top sheath layer can be severed from the bottom sheath layer and peeled back an appropriate length in order to expose the tops of the reinforcement strips 6, and to provide access to the optical waveguides 10.

It will be appreciated from the foregoing that location of the reinforcement strips 6 and the optical waveguides therebetween which are preserved in a predetermined location across the base sheath layer 2, can be ascertained with a high degree of certainty, which greatly enhances the terminatability of the cable. Further, the elongate reinforcement strips 6 serve to structurally reinforce the cable geometry and resiliently resist any overbending of the cable which would damage the optical waveguides. The strength members further absorb impact on the cable and function to control the bend radius of the cable to ensure that over-bending cannot occur. Moreover, if the elongate reinforcement strips 6 are of metallic composition, through they need not necessarily be, they can fulfill the additional function of bussing power along the cable to remote electro-optic electronic circuitry.

An alternative embodiment of the present invention is illustrated in Figure 9. As shown, the elongate reinforcement or strength members 24 can be of circular cross section if so desired by the user. In all other respects, the cable may be fabricated and formed in the sequential operation described in detail above. It is also within the contemplation of the present invention that the strength members 24 of Figure 9 or 6 of Figure 3 may be composed of dielectric material if metallic members are neither needed nor desired by the cable user. Moreover, the manufacture of the subject laminated cable may be modified by those skilled in the art without departing from the scope of the present invention. For example, the strength members may be rolled onto the bottom sheath layer instead of deposited thereon by the above described cut and peel procedure. Also, while the above set forth cable embodiments envision securely affixing the waveguides upon the bottom sheath layer, it will be appreciated that the waveguides may be free floating in an insulating filling gel if so desired. Such a free float condition would be advantageous if fixed location of the waveguides is not deemed critical, since the waveguides would thereby be entirely surrounded by insulating fill material and therefore optimally protected.

The present invention may be subject to many modifications without departing from the spirit of essential characteristics thereof. The present embodiments should therefore be considered as illustrative and not restrictive of the scope of the subject invention.

9371

CLAIMS:

1. A fiber optic ribbon cable of the type comprising a sheath (2,16) in which strength members (6, 24) and optical transmission members (10) are disposed, characterized in that:

said strength members (6, 24) are secured in spaced positions within and along said sheath (8, 16);

said optical transmission members (10) are positioned in the spaces between said strength members along with insulating material (12) covering said optical transmission members (10).

2. A fiber optic ribbon cable as set forth in claim 1, characterized in that said strength members (6) are rectangular shaped.

3. A fiber optic ribbon cable as set forth in claim 1, characterized in that said strength members (24) are circular shaped.

4. A fiber optic ribbon cable as set forth in claim 1, characterized in that said optical transmission members (10) are secured in position along said sheath (8, 16) and said insulating material (12) extends along said optical transmission members (10).

5. A fiber optic ribbon cable as set forth in claim 1, characterized in that edges of said sheath (2, 16) are adhered together with spaces (20) located between the adhered edges and the strength members (6, 24).

6. A method of making a fiber optic ribbon cable characterized by the steps of:

bonding strength members (6, 24) onto a bottom sheath layer (2) at spaced locations therealong;

positioning optical transmission members (10) along with insulating material (12) into the spaces between the strength members (6, 24);

covering the strength members (6, 24) and the optical transmission members (10) and insulating material (12) with a top sheath layer (16); and

bonding edge portions of the sheath layers (2, 16) together.

7. A method as set forth in claim 6 characterized in that said optical transmission members (10) are adhesively secured in position on said bottom sheath layer (2) and positioning said insulating material (12) over said optical transmission members.

9371

8. A method as set forth in claim 6 <u>characterized in that</u> said optical transmission members (10) are disposed in an insulating gel.

9. A method as set forth in claim 6 <u>characterized in that</u> a space (20) is provided between the bonded edges of the sheath layers (2, 16) and strength members (6, 24).

FIG. 1

FIG. 2

FIG. 7

0101766

2/3

FIG. 3

FIG. 4

FIG. 5

FIG. 6

FIG. 8

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 02 B 5/16 |
| A | GB-A-2 001 182 (THOMSON-BRANDT) <br><br> * Page 1, lines 29-39 * | 1,2,4, 6,7 | |
| | --- | | |
| A | US-A-4 138 193 (J.A. OLSZEWSKI et al.) <br> * Column 1, lines 35-47 * | 1,3-7, 9 | |
| | --- | | |
| A | US-A-3 984 172 (C.M. MILLER) <br> * Column 1, line 59 – column 2, line 44 * | 1,3,4 | |
| | --- | | |
| A | DE-A-2 808 271 (F. FORT) <br> * Page 3, lines 4-19 * | 1,4 | |
| | ----- | | |

**TECHNICAL FIELDS SEARCHED (Int. Cl. ³)**

G 02 B 5/16
H 01 B 7/08

The present search report has been drawn up for all claims

| Place of search <br> BERLIN | Date of completion of the search <br> 15-02-1983 | Examiner <br> BOTTERILL K.J. |
|---|---|---|